# EUROPEAN PATENT APPLICATION

(11) **EP 4 194 903 A1**
(43) Date of publication of application: **14.06.2023**
(21) Application number: 21853521.9
(22) Date of filing: 02.07.2021
(51) Int. Cl.: G01T 1/24

(54) **IONIZING RADIATION CONVERSION DEVICE AND METHOD FOR DETECTING IONIZING RADIATION**

(30) Priority: 06.08.2020 JP 2020134152
(71) Applicant: Panasonic Intellectual Property Management Co., Ltd., Osaka-shi, Osaka 540-6207 (JP)
(72) Inventor: NEGAMI Takayuki, Chuo-ku, Osaka-shi, Osaka 540-6207 (JP); SEKIMOTO Takeyuki, Chuo-ku, Osaka-shi, Osaka 540-6207 (JP); MATSUI Taisuke, Chuo-ku, Osaka-shi, Osaka 540-6207 (JP); KANEKO Yukihiro, Chuo-ku, Osaka-shi, Osaka 540-6207 (JP)
(74) Representative: Grünecker Patent- und Rechtsanwälte PartG mbB
(86) International application number: PCT/JP2021/025154
(87) International publication number: WO 2022/030154

(57) **Abstract**

An ionizing radiation conversion device 100 of the present disclosure includes a first electrode 11, a second electrode 13, and an ionizing radiation conversion layer 12 disposed between the first electrode 11 and the second electrode 13. Here, the first electrode 11 contains a first metal, the second electrode 13 contains at least one selected from the group consisting of second metals and metal oxides, and the ionizing radiation conversion layer 12 contains a perovskite compound. The difference of a value of electron affinity of the ionizing radiation conversion layer 12 minus a value of work function of the first electrode 11 is greater than or equal to 0 eV and less than or equal to 0.4 eV.

## Description

### Technical Field

The present disclosure relates to an ionizing radiation conversion device and an ionizing radiation detection method.

### Background Art

There are various devices that convert an ionizing radiation such as X-rays into electrical signals. Such devices can measure the intensity of an ionizing radiation emitted from a substance, or can give information on the inside of a substance by measuring an ionizing radiation that has been applied to the substance and has penetrated the substance. Various materials capable of converting an ionizing radiation into electrical signals have been developed and commercialized. Generally, it is desirable that such materials contain an atom of high atomic number. Amorphous selenium and cesium iodide are currently used. Materials that attract attention in recent years are perovskite compounds represented by methylammonium lead iodide.

The materials described above can convert an ionizing radiation into electrical signals with high sensitivity by having an increased thickness.

In Non Patent Literature 1, methylammonium lead iodide is used as a perovskite compound that converts X-rays into electric charges.

### Citation List

### Non Patent Literature

NPL 1: Nature Photonics Vol. 9, p. 444

### Summary of Invention

### Technical Problem

An object of the present disclosure is to provide an ionizing radiation conversion device that is highly sensitive to an ionizing radiation.

### Solution to Problem

An ionizing radiation conversion device of the present disclosure includes:
a first electrode;
a second electrode; and
an ionizing radiation conversion layer disposed between the first electrode and the second electrode,
wherein
the first electrode contains a first metal,
the second electrode contains at least one selected from the group consisting of second metals and metal oxides,
the ionizing radiation conversion layer contains a perovskite compound, and
the difference of a value of electron affinity of the ionizing radiation conversion layer minus a value of work function of the first electrode is greater than or equal to 0 eV and less than or equal to 0.4 eV.

### Advantageous Effects of Invention

An object of the present disclosure is to provide an ionizing radiation conversion device that is highly sensitive to an ionizing radiation.

### Brief Description of Drawings

[Fig. 1] Fig. 1 illustrates a sectional view of an ionizing radiation conversion device 100 of the present disclosure.
[Fig. 2] Fig. 2 illustrates a sectional view of an ionizing radiation conversion device 200 of the present disclosure.
[Fig. 3] Fig. 3 illustrates an exemplary energy band structure of an electrode and an ionizing radiation conversion layer according to the first embodiment.
[Fig. 4] Fig. 4 illustrates an exemplary sectional energy band structure of an ionizing radiation conversion device according to the first embodiment.
[Fig. 5] Fig. 5 illustrates an exemplary energy band structure of a second electrode and an ionizing radiation conversion layer according to the second embodiment.
[Fig. 6] Fig. 6 illustrates an exemplary sectional energy band structure of an ionizing radiation conversion device according to the second embodiment.

### Description of Embodiments

### (Underlying Knowledge Forming Basis of the Present Disclosure)

In order to ensure that an ionizing radiation conversion layer that has absorbed an ionizing radiation (for example, X-rays) will convert the radiation into electron-hole pairs, and the electrons and the holes will be collected effectively, the contact between the ionizing radiation conversion layer and an electrode needs to be an ohmic contact or a contact having a low energy barrier carrier and not blocking the transport of electrons and holes.

To solve this problem, the present inventors have studied perovskite compounds as ionizing radiation converting materials that are added to ionizing radiation conversion layers.

According to the ionizing radiation conversion device of the present disclosure, the contacts between the ionizing radiation conversion layer and the first electrode, and between the ionizing radiation conversion layer and the second electrode have no or a low energy barrier. That is, the ionizing radiation conversion device of the present disclosure has high sensitivity to an ionizing radiation and realizes a small conversion loss.

In the present disclosure, the "ionizing radiation" means α radiation, β radiation, neutron radiation, proton radiation, X-rays, or γ-rays.

### (Embodiments of the Present Disclosure)

Hereinbelow, embodiments of the present disclosure will be described with reference to the drawings.

An ionizing radiation conversion device of the present disclosure includes a first electrode, a second electrode, and an ionizing radiation conversion layer disposed between the first electrode and the second electrode. Here, the first electrode contains a first metal. The second electrode contains at least one selected from the group consisting of second metals and metal oxides. The ionizing radiation conversion layer contains a perovskite compound. The difference of a value of electron affinity of the ionizing radiation conversion layer minus a value of work function of the first electrode is greater than or equal to 0 eV and less than or equal to 0.4 eV.

According to the above configuration, the ionizing radiation conversion device of the present disclosure attains high sensitivity to an ionizing radiation. That is, the ionizing radiation conversion device of the present disclosure can efficiently convert an ionizing radiation into charges.

For example, the ionizing radiation conversion device may be used as an ionizing radiation detector, an imaging device, or a dosimeter.

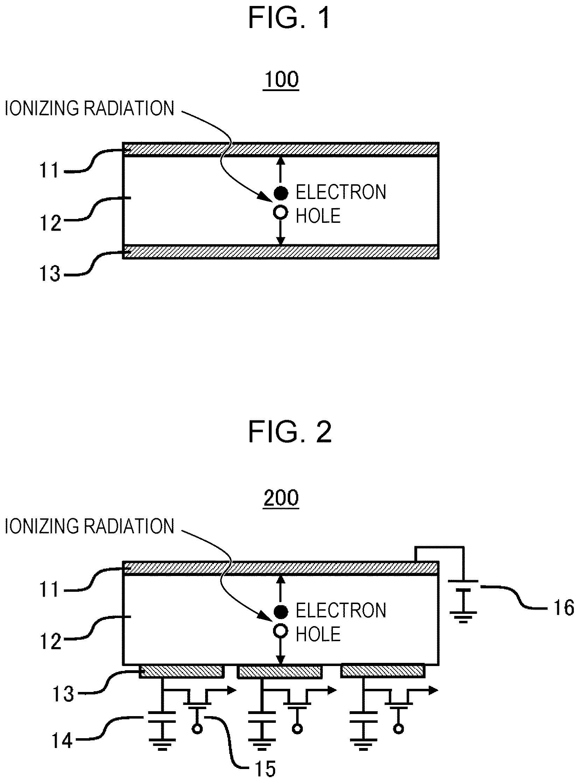

Fig. 1 illustrates a sectional view of an ionizing radiation conversion device 100 of the present disclosure.

The ionizing radiation conversion device 100 includes a first electrode 11, a second electrode 13, and an ionizing radiation conversion layer 12 disposed between the first electrode and the second electrode.

The ionizing radiation conversion layer 12 contains a perovskite compound.

In the present disclosure, the "perovskite compound" is a compound represented by ABX₃, or an analogue of such a compound.

For example, the compound represented by ABX₃ is BaTiO₃, MgSiO₃, CsPbI₃, CsPbBr₃, or (CH₃NH₃)PbI₃.

The analogue of the compound represented by ABX₃ has the following structure (i) or (ii).
(i) A structure resulting from deletion of part of the A-site, the B-site, or the X-site in the compound represented by ABX₃ (for example, (CH₃NH₃)₃Bi₂I₉).
(ii) A structure corresponding to the compound represented by ABX₃, except that the A-site, the B-site, or the X-site is composed of materials having different valences (for example, Cs(Ag_{0.5}Bi_{0.5})I₃).

The perovskite compound may include two or more kinds of cations, and one or more kinds of monovalent anions.

The perovskite compound may consist essentially of two or more kinds of cations, and one or more kinds of monovalent anions. The phrase that "the perovskite compound consists essentially of two or more kinds of cations, and one or more kinds of monovalent anions" means that the total of the amounts of substance of the two or more kinds of cations, and the one or more kinds of monovalent anions is greater than or equal to 90 mol% of the total of the amounts of substance of all the elements constituting the perovskite compound. The perovskite compound may consist of two or more kinds of cations, and one or more kinds of monovalent anions.

To increase the sensitivity to an ionizing radiation, the two or more kinds of cations may include at least one selected from the group consisting of Pb²⁺, Sn²⁺, Ge²⁺, and Bi3+.

For example, the monovalent anion is a halide anion or a composite anion. Examples of the halide anions include fluoride, chloride, bromide, and iodide. Examples of the composite anions include SCN⁻, NO₃⁻, and HCOO⁻.

For example, the perovskite compound may be a compound represented by the chemical formula ABX₃ (A is a monovalent cation, B is a divalent cation, and X is a halide anion).

The monovalent cation is an organic cation, or an alkali metal cation.

Examples of the organic cations include methylammonium cation (namely, CH₃NH₃⁺), formamidinium cation (namely, NH₂CHNH₂⁺), phenylethylammonium cation (namely, C₆H₅C₂H₄NH₃⁺), and guanidinium cation (namely, CH₆N₃⁺).

Examples of the alkali metal cations include cesium cation (namely, Cs⁺), and rubidium cation (namely, Rb⁺).

The perovskite compound may include a plurality of monovalent cations. For example, the perovskite compound may include a mixture of at least one of the organic cations described above, and at least one of the metal cations described above.

For example, the divalent cation is a cation of Group 13 to Group 15 element. For example, the divalent cation is lead cation (namely, Pb²⁺), tin cation (namely, Sn²⁺), or germanium cation (namely, Ge²⁺). To convert an ionizing radiation more efficiently, the divalent metal cation may be Pb²⁺.

For example, the perovskite compound is CsPbI₃, or CsPbBr₃.

To further increase the sensitivity to an ionizing radiation, the perovskite compound may be composed of a monovalent organic cation, a cation of Group 14 element, and a halide anion. That is, the perovskite compound may be an organic-inorganic perovskite compound.

To increase the sensitivity to an ionizing radiation, the organic-inorganic perovskite compound may include, as the organic cation, at least one selected from the group consisting of methylammonium cation (hereinafter, written as "MA"), and formamidinium cation (hereinafter, written as "FA").

For example, the cation of Group 14 element is Pb²⁺, or Sn²⁺.

For example, the organic-inorganic perovskite compound is CH₃NH₃PbI₃, CH₃CH₂NH₃PbI₃, HC(NH₂)₂PbI₃, or CH₃NH₃PbBr₃.

The organic-inorganic perovskite compound has a high coefficient of absorption of an ionizing radiation and can efficiently convert an ionizing radiation into charges. Furthermore, the organic-inorganic perovskite compound, by its containing an organic cation, can suppress the recombination of charges and thus allows for efficient collection of charges.

To convert an ionizing radiation efficiently, the ionizing radiation conversion layer 12 may contain greater than or equal to 30 mol% of the perovskite compound. The ionizing radiation conversion layer 12 may contain greater than or equal to 80 mol% of the perovskite compound. The ionizing radiation conversion layer 12 may consist of the perovskite compound.

To convert an ionizing radiation efficiently, the ionizing radiation conversion layer 12 may have a thickness of greater than or equal to 0.1 µm and less than or equal to 1 cm. Desirably, the ionizing radiation conversion layer 12 may have a thickness of greater than or equal to 100 µm and less than or equal to 1 mm.

The first electrode 11 contains a first metal.

The first metal may be at least one selected from the group consisting of Mg, Zr, Hf, Mn, Cd, Ga, In, and Bi. In this case, the contact resistance at the interface between the first electrode 11 and the ionizing radiation conversion layer 12 can be reduced.

The second electrode 13 contains at least one selected from the group consisting of second metals and metal oxides.

The second metal may be at least one selected from the group consisting of Pt, and Se. In this case, the contact resistance at the interface between the second electrode 13 and the ionizing radiation conversion layer 12 can be reduced.

The metal oxide may be at least one selected from the group consisting of MoO₃, and WO₃. In this case, the contact resistance at the interface between the second electrode 13 and the ionizing radiation conversion layer 12 can be reduced.

The first electrode 11 may contain greater than or equal to 50 mol% of the first metal. The first electrode 11 may contain greater than or equal to 90 mol% of the first metal. Desirably, the first electrode 11 may consist of the first metal.

The second electrode 13 may contain greater than or equal to 50 mol% of at least one selected from the group consisting of the second metals and the metal oxides. The second electrode 13 may contain greater than or equal to 90 mol% of at least one selected from the group consisting of the second metals and the metal oxides. Desirably, the second electrode 13 may consist of at least one selected from the group consisting of the second metals and the metal oxides. The second electrode 13 may consist of the second metal, or may consist of the metal oxide.

Fig. 2 illustrates a sectional view of an ionizing radiation conversion device 200 of the present disclosure.

The ionizing radiation conversion device 200 includes a charge accumulator 14, a thin-film transistor 15, and a voltage applicator 16, in addition to the configuration of the ionizing radiation conversion device 100.

The charge accumulator 14 is electrically connected to the second electrode 13.

The thin-film transistor 15 is electrically connected to the second electrode 13 and the charge accumulator 14.

In a top view of the ionizing radiation conversion device 200, the first electrode 11 and the ionizing radiation conversion layer 12 are arranged so as to cover almost the entire surface of the thin-film transistor 15.

Next, the outline of the operation of the ionizing radiation conversion device 200 of direct conversion type will be described with reference to Fig. 2. An ionizing radiation emitted from an ionizing radiation generator passes through a subject such as a human body, and then enters the ionizing radiation conversion layer 12. The ionizing radiation conversion layer 12 produces excited charges (hole-electron pairs) corresponding to the amount of the ionizing radiation (for example, X-rays) incident on the perovskite compound. By following the polarity of the voltage applied to the ionizing radiation conversion layer 12 by the voltage applicator 16, the generated charges move to the second electrode (that is, a pixel electrode) 13 and are accumulated in the charge accumulator 14 in the thin-film transistor 15. Subsequently, the thin-film transistors 15 are scanned in a line-sequential manner to read the charge information stored in the charge accumulators 14 through data bus lines. The charge information that has been read out is converted into digital image signals and is output sequentially.

An ionizing radiation may be detected by detecting charges that are generated by the irradiation of the perovskite compound in the ionizing radiation conversion layer 12 with any ionizing radiation. According to the detection method described above, an ionizing radiation can be detected with high sensitivity.

### (First Embodiment)

In the first embodiment, the ionizing radiation conversion layer includes an organic-inorganic perovskite compound and is in contact with the first electrode and the second electrode. Here, the first electrode and the second electrode have a work function equal to or lower than the electron affinity of the ionizing radiation conversion layer.

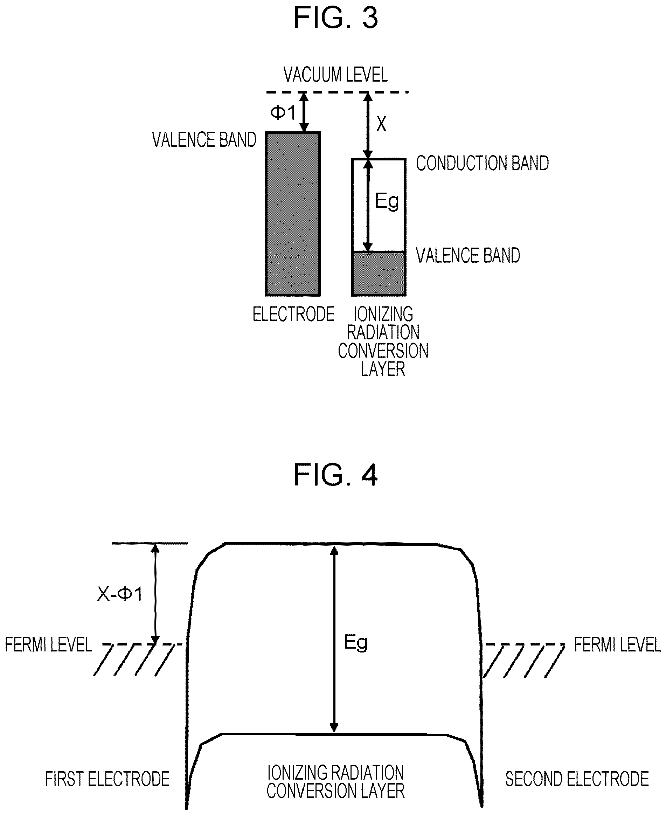

Fig. 3 illustrates an exemplary energy band structure of the electrode and the ionizing radiation conversion layer according to the first embodiment. Fig. 3 illustrates the work function (φ1) of the electrodes out of contact with the ionizing radiation conversion layer, and the electron affinity (χ) of the ionizing radiation conversion layer out of contact with the first electrode and the second electrode. Here, both the first electrode and the second electrode have a work function (φ1) lower than the electron affinity (χ) of the ionizing radiation conversion layer.

Fig. 4 illustrates an exemplary sectional energy band structure of the ionizing radiation conversion device according to the first embodiment.

Fig. 4 schematically illustrates an energy band diagram for the case where the ionizing radiation conversion layer is in contact with the first electrode and the second electrode.

From Fig. 4, it can be seen that there is no energy barrier between the ionizing radiation conversion layer and the first electrode or the second electrode. Thus, electrons generated in the ionizing radiation conversion layer by an ionizing radiation can be effectively taken out. Here, if the energy difference (χ-φ1) is large between the electron affinity of the ionizing radiation conversion layer and the work function of the first electrode and the second electrode, the probability is high for electrons to be captured at the contact interface and recombination may occur. As a result, the electrons disappear.

The difference of the value of electron affinity of the ionizing radiation conversion layer minus the value of work function of the first electrode, and the difference of the value of electron affinity of the ionizing radiation conversion layer minus the value of work function of the second electrode are each advantageously greater than or equal to 0 eV and less than or equal to 0.4 eV. With this configuration, no energy barriers are formed and electrons can be prevented from being captured at the contact interface.

Examples of the organic-inorganic perovskite compounds having high sensitivity to an ionizing radiation include FAPbI₃ and MAPbI₃.

The electron affinity of FAPbI₃ is 4.22 eV. When the ionizing radiation conversion layer is made of FAPbI₃, the first electrode and the second electrode may be composed of a material having a work function of less than or equal to 4.22 eV. Examples of such materials include Zr, Hf, Mn, Cd, Ga, In, and Bi. The work functions of Zr, Hf, Mn, Cd, Ga, In, and Bi are 4.05 eV, 3.90 eV, 4.10 eV, 4.22 eV, 4.20 eV, 4.12 eV, and 4.22 eV, respectively. The material may be an alloy having a work function of less than or equal to 4.22 eV.

The electron affinity of MAPbI₃ is 3.92 eV. Thus, when the ionizing radiation conversion layer is made of MAPbI₃, the first electrode and the second electrode may be composed of a material having a work function of less than or equal to 3.92 eV. Examples of such materials include Mg, and Hf. The work functions of Mg and Hf are 3.66 eV and 3.90 eV, respectively. The material may be an alloy having a work function of less than or equal to 3.92 eV.

As described above, the contact resistance between the ionizing radiation conversion layer and the electrode can be reduced by using a metal or a metal oxide having a work function lower than the electron affinity of the ionizing radiation conversion layer.

The first electrode may contain the same metal as the second electrode. In this case, the two interfaces in Fig. 4 (that is, the interface between the first electrode and the ionizing radiation conversion layer, and the interface between the second electrode and the ionizing radiation conversion layer) have identical energy band curves (that is, internal electric fields). As a result, the application of a voltage creates a constant electric field inside the ionizing radiation conversion layer, and the charges can be taken out while being accelerated at a constant rate.

For example, the first electrode and the second electrode may each contain In. The first electrode and the second electrode may each consist of In.

### (Second Embodiment)

In the second embodiment, the ionizing radiation conversion layer includes an organic-inorganic perovskite compound and is in contact with the first electrode and the second electrode. Here, the second electrode has a work function equal to or greater than the sum of the electron affinity and the forbidden band gap of the ionizing radiation conversion layer.

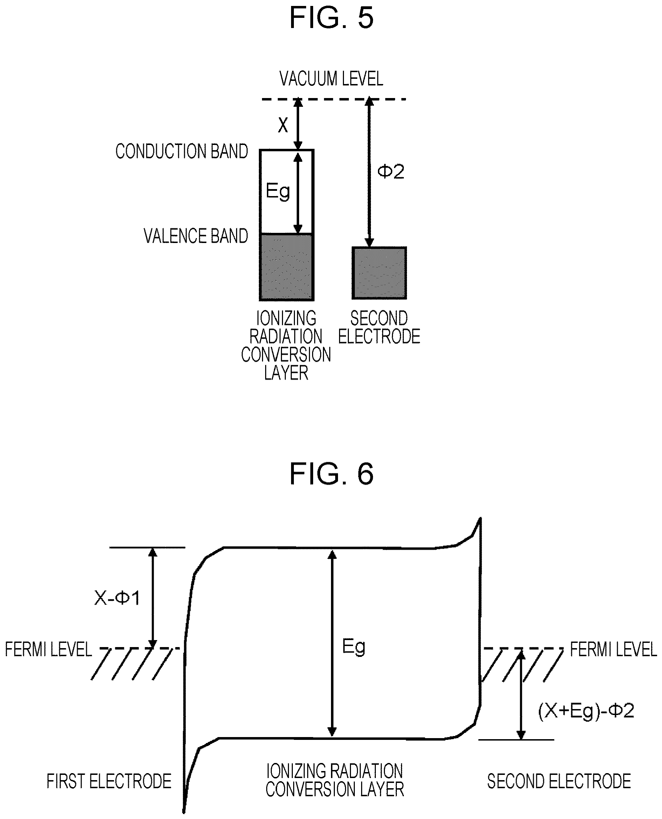

Fig. 5 illustrates an exemplary energy band structure of the second electrode and the ionizing radiation conversion layer according to the second embodiment.

Fig. 5 illustrates the electron affinity (χ) and the forbidden band gap (Eg) of the ionizing radiation conversion layer out of contact with the second electrode, and the work function (φ2) of the second electrode out of contact with the ionizing radiation conversion layer. Here, the second electrode has a work function (φ2) greater than the sum of the electron affinity (χ) and the forbidden band gap (Eg) of the ionizing radiation conversion layer.

Fig. 6 illustrates an exemplary sectional energy band structure of the ionizing radiation conversion device according to the second embodiment.

Fig. 6 schematically illustrates an energy band diagram for the case where the ionizing radiation conversion layer is in contact with the first electrode and the second electrode. Here, the energy difference (χ - φ1) between the electron affinity (χ) of the ionizing radiation conversion layer and the work function (φ1) of the first electrode (that is, the difference of the value of electron affinity of the ionizing radiation conversion layer minus the value of work function of the first electrode) is greater than or equal to 0 eV and less than or equal to 0.4 eV.

From Fig. 6, it can be seen that there is no energy barrier between the second electrode and the ionizing radiation conversion layer. Thus, holes generated in the ionizing radiation conversion layer by an ionizing radiation can be effectively taken out from the second electrode. Here, if the absolute value of the energy difference ((χ + Eg) - φ2) is large between the sum of the electron affinity and the forbidden band gap of the ionizing radiation conversion layer, and the work function of the second electrode, the probability is high for holes to be captured at the contact interface and recombination may occur. As a result, the holes disappear.

The difference of the sum of the value of electron affinity of the ionizing radiation conversion layer and the value of forbidden band gap of the ionizing radiation conversion layer minus the value of work function of the second electrode is advantageously greater than or equal to -0.4 eV and less than or equal to 0 eV. With this configuration, no energy barriers are formed and holes can be prevented from being captured at the contact interface.

As described hereinabove, the organic-inorganic perovskite compounds having high sensitivity to an ionizing radiation may be exemplified by FAPbI₃ and MAPbI₃.

The sum of the electron affinity and the forbidden band gap of FAPbI₃ is 5.61 eV. When the ionizing radiation conversion layer is made of FAPbI₃, the second electrode may be composed of a material having a work function of greater than or equal to 5.61 eV. Examples of such materials include Pt, and Se. The work functions of Pt and Se are 5.65 eV and 5.90 eV, respectively. The material may be an alloy having a work function of greater than or equal to 5.61 eV.

The sum of the electron affinity and the forbidden band gap of MAPbI₃ is 5.53 eV. Thus, when the ionizing radiation conversion layer is made of MAPbI₃, the second electrode may be composed of a material having a work function of greater than or equal to 5.53 eV. Examples of such materials include Pt, and Se. The material may be an alloy having a work function of greater than or equal to 5.53 eV.

The second electrode may be composed of a metal oxide. Examples of the metal oxides include WO₃, and MoOs. The work functions of WO₃ and MoO₃ are 5.6 eV and 5.7 eV, respectively.

In the second electrode, a metal film may be formed on the side opposite from the side in contact with the ionizing radiation conversion layer. A metal film having high conductivity allows a voltage to be uniformly applied in the plane of the ionizing radiation conversion layer. As a result, for example, the resolution in the detection of an ionizing radiation can be enhanced.

As described above, the contact resistance between the ionizing radiation conversion layer and the second electrode can be reduced by using, as the material of the second electrode, a metal or a metal oxide having a work function greater than the sum of the electron affinity and the forbidden band gap of the ionizing radiation conversion layer.

The electron affinity, or the energy level at the lower end of the conduction band, of the ionizing radiation conversion film may be measured by inverse photoemission spectroscopy, or may be determined from the sum of the energy level at the upper end of the valence band described below and the forbidden band gap measured by light transmission spectroscopy or photoluminescence spectroscopy. The energy level at the upper end of the valence band, which is the sum of the electron affinity and the forbidden band gap, of the ionizing radiation conversion film may be measured by XPS (X-ray photoelectron spectroscopy), UPS (ultraviolet photoelectron spectroscopy), or PYS (photoelectron yield spectroscopy).

The work function of the electrodes may be similarly measured by XPS or UPS, or may be measured by Auger electron spectroscopy.

### (Ionizing Radiation Detection Method)

An ionizing radiation detection method of the present disclosure is a method for detecting an ionizing radiation using the ionizing radiation conversion device of the present disclosure described hereinabove.

Specifically, for example, the ionizing radiation detection method of the present disclosure uses an ionizing radiation conversion device including:
a first electrode;
a second electrode; and
an ionizing radiation conversion layer disposed between the first electrode and the second electrode,
wherein
the first electrode contains a first metal,
the second electrode contains at least one selected from the group consisting of second metals and metal oxides,
the ionizing radiation conversion layer contains a perovskite compound, and
the difference of a value of electron affinity of the ionizing radiation conversion layer minus a value of work function of the first electrode is greater than or equal to 0 eV and less than or equal to 0.4 eV. In the ionizing radiation detection method of the present disclosure, charges generated by the perovskite compound upon irradiation with an ionizing radiation are detected with the ionizing radiation conversion device.

### (Methods for Manufacturing Ionizing Radiation Conversion Devices)

Hereinbelow, an exemplary method for manufacturing the ionizing radiation conversion device will be described with reference to Fig. 1.

First, a second electrode 13 is formed on a substrate (not shown). For example, the substrate may be glass or silicon. For example, a layer of In is formed as the second electrode 13 on the substrate by a sputtering method. For example, the film thickness of the second electrode 13 is 500 nm.

Next, an ionizing radiation conversion layer 12 is formed on the second electrode 13.

A seed layer for an ionizing radiation conversion layer is formed on the second electrode 13 by a spin coating method. The seed layer, for example, a CH₃NH₃PbI₃ layer may be formed by spin coating a dimethyl sulfoxide solution including methylammonium iodide (namely, CH₃NH₃I) and PbI₂ on the second electrode 13 at 3000 rpm. For example, the film thickness of the seed layer is 300 nm.

Next, the substrate bearing the seed layer is soaked in a supersaturated γ-butyl lactone solution of CH₃NH₃I and PbI₂ to let the crystal of the CH₃NH₃PbI₃ layer grow. An ionizing radiation conversion layer 12 is thus formed. For example, the film thickness of the ionizing radiation conversion layer 12 is 300 µm.

Lastly, a first electrode 11 is formed on the ionizing radiation conversion layer 12. For example, a layer of In is formed on the ionizing radiation conversion layer 12 by a sputtering method. For example, the film thickness of the first electrode 11 is 500 nm.

By the process described above, an ionizing radiation conversion device is obtained.

### Industrial Applicability

The ionizing radiation conversion device of the present disclosure is used in, for example, an ionizing radiation detector.

### Reference Signs List

11 first electrode
12 ionizing radiation conversion layer
13 second electrode
14 charge accumulator
15 thin-film transistor
16 voltage applicator
100, 200 ionizing radiation conversion devices

## Claims

1. An ionizing radiation conversion device comprising:
a first electrode;
a second electrode; and
an ionizing radiation conversion layer disposed between the first electrode and the second electrode,
wherein
the first electrode contains a first metal,
the second electrode contains at least one selected from the group consisting of second metals and metal oxides,
the ionizing radiation conversion layer contains a perovskite compound, and
the difference of a value of electron affinity of the ionizing radiation conversion layer minus a value of work function of the first electrode is greater than or equal to 0 eV and less than or equal to 0.4 eV.

2. The ionizing radiation conversion device according to claim 1, wherein
the difference of the value of electron affinity of the ionizing radiation conversion layer minus a value of work function of the second electrode is greater than or equal to 0 eV and less than or equal to 0.4 eV.

3. The ionizing radiation conversion device according to claim 1, wherein
the difference of the sum of the value of electron affinity of the ionizing radiation conversion layer and a value of forbidden band gap of the ionizing radiation conversion layer minus a value of work function of the second electrode is greater than or equal to -0.4 eV and less than or equal to 0 eV.

4. The ionizing radiation conversion device according to any one of claims 1 to 3, wherein the perovskite compound includes two or more kinds of cations, and one or more kinds of anions.

5. The ionizing radiation conversion device according to claim 4, wherein
the two or more kinds of cations include at least one selected from the group consisting of Pb²⁺, Sn²⁺, Ge²⁺, and Bi³⁺.

6. The ionizing radiation conversion device according to any one of claims 1 to 5, wherein
the first metal is at least one selected from the group consisting of Mg, Zr, Hf, Mn, Cd, Ga, In, and Bi.

7. The ionizing radiation conversion device according to any one of claims 1 to 6, wherein
the second metal is at least one selected from the group consisting of Pt, and Se.

8. The ionizing radiation conversion device according to any one of claims 1 to 7, wherein
the metal oxide is at least one selected from the group consisting of MoO₃, and WO₃.

9. The ionizing radiation conversion device according to any one of claims 1 to 6, wherein
the first electrode contains the same metal as the second electrode.

10. The ionizing radiation conversion device according to any one of claims 1 to 9, wherein
the ionizing radiation conversion layer is in contact with the first electrode and the second electrode.

11. An ionizing radiation detection method using an ionizing radiation conversion device, the ionizing radiation conversion device comprising:
a first electrode;
a second electrode; and
an ionizing radiation conversion layer disposed between the first electrode and the second electrode,
wherein
the first electrode contains a first metal,
the second electrode contains at least one selected from the group consisting of second metals and metal oxides,
the ionizing radiation conversion layer contains a perovskite compound, and
the difference of a value of electron affinity of the ionizing radiation conversion layer minus a value of work function of the first electrode is greater than or equal to 0 eV and less than or equal to 0.4 eV,
and wherein the ionizing radiation detection method detects, with the ionizing radiation conversion device, charges generated by the perovskite compound upon irradiation with an ionizing radiation.
